(19) Europäisches Patentamt

European Patent Office

Office européen des brevets

(11) EP 1 260 812 B1

(12) **EUROPEAN PATENT SPECIFICATION**

(45) Date of publication and mention
of the grant of the patent:
**02.11.2006 Bulletin 2006/44**

(51) Int Cl.:
***G01N 23/20*** (2006.01)

(21) Application number: **01401378.3**

(22) Date of filing: **25.05.2001**

(54) **Process and apparatus for the x-ray diffraction characterization of a material with amorphous phase**

Verfahren und Vorrichtung zur Charakterisierung eines Stoffes mit amorpher Phase mittels Röntgenbeugung

Procédé et dispositif pour la caractérisation d'un matériau comportant une phase amorphe utilisant la diffraction de rayons X

(84) Designated Contracting States:
**AT BE CH CY DE DK ES FI FR GB GR IE IT LI LU MC NL PT SE TR**

(43) Date of publication of application:
**27.11.2002 Bulletin 2002/48**

(73) Proprietor: **LAFARGE**
**75116 Paris (FR)**

(72) Inventors:
• **Walenta, Günther**
**69740 Genas (FR)**
• **Fullman, Thomas**
**69360 Saint Symphorien d'Ozon (FR)**
• **Westphal, Torsten**
**69360 Saint Symphorien d'Ozon (FR)**
• **Pöllmann, Herbert**
**90765 Fürth (DE)**

(74) Representative: **Michelet, Alain et al**
**Cabinet Harlé et Phélip**
**7, rue de Madrid**
**75008 Paris (FR)**

(56) References cited:
• **WINBURN R S ET AL: "Rietveld quantitative X-ray diffraction analysis of NIST fly ash standard reference materials" POWDER DIFFRACTION, vol. 15, no. 3, September 2000 (2000-09), pages 163-172, XP001029978**

**Description**

The current invention relates to a process intended for the qualitative and quantitative characterization of a material having an amorphous phase using X-ray diffraction method. It can be used in the cement industry or whenever a solid or liquid material needs to be analyzed.

X-ray diffraction methods are well-known and common tools for qualitative and quantitative phase analysis of solid or liquid materials, which are crystals or behave as such with X-ray. Those materials are efficient diffracting elements due to their repetitive lattice structure and produce specific diffraction patterns which can be easily analyzed thanks to computerized methods such as the one conceived by H. M. Rietveld at the end of the sixties: "PROFILE REFINEMENT METHOD FOR NUCLEAR AND MAGNETIC STRUCTURES", J. App. Cryst., Vol. 2, (1969). The Rietveld method is, for example, described in the paper "QUANTITATIVE RIETVELD PHASE ANALYSIS OF ALUMINATE CEMENTS" of Füllmann, Thesis (1997) - University of Erlangen, Germany and "SYNTHESIS AND RIETVELD - REFINEMENTS OF PHASES OF ALUMINATE CEMENTS" of Walenta, Thesis (1997) - University of Erlangen, Germany .

The Rietveld method proved its capabilities for quantitative phase analysis. The base of the Rietveld method is the mathematical and physical description of parameters and processes that influence the shape of a powder diffraction pattern. If the phase composition of a sample is known qualitatively, the Rietveld method can calculate the quantitative composition by stepwise variation of the crystallographic parameters of each mineralogical phase and comparison of computed with measured patterns until the smallest difference between measured and computed pattern is achieved. The crystallographic parameters of all mineralogical phases of a given material are defined as "Control file".

However, such method is not directly usable in case the solid is or contains an amorphous phase, as no lattice is available to produce efficient diffraction of X-ray and it causes an increase in the statistical noise. This noise can for example be created by the scattering of the X-ray beam caused by the air between the X-ray source and the sample, the sample holder or an amorphous phase in the sample. This statistical noise is called background of the diffraction pattern.

Many solid materials that need to be characterized have amorphous portion. Amorphous phases cannot be evaluated directly by X-ray powder diffraction because they contribute to background noise and the resulting scattering of the X-ray beam causes no regular peaks but a statistical noise all over the pattern.

To overcome this difficulty, it has been proposed to mix in a known ratio, a complete crystal mineralogical phase , which is defined as «Standard» in the following description, with the solid, and to use the diffraction pattern of this mixture for the quantitative and qualitative characterization using previously mentioned the Rietveld method.

Such procedure is, for example, also described in the paper "RIETVELD QUANTITATIVE X-RAY DIFFRACTION ANALYSIS OF NIST FLY ASH «STANDARD» REFERENCE MATERIAL" of Winburn et al. in Powder Diffr., Vol. 15, No.3, September 2000. It is then possible to quantify the amorphous portion by adding a definite amount of the «Standard» material. Using the Rietveld method an apparent composition is calculated, the amorphous portion being ignored. The crystalline parts are quantified to the sum of 100 %. So, each crystalline phase is overestimated. Because of the difference of amounts of «Standard» added and «Standard» computed, the amount of amorphous portion and the true phase composition can be recalculated.

This last method has some drawbacks. The main one being that the mixture of the «Standard» element and the solid has to be intimate, and very precise in ratio and respective weights. Any error in the ratio and/or weights results in errors in the characterization. Changes in «Standard» quality caused by the material supplier can also result in errors. Ideal mixing ratios are hard to realize because of the limited accuracy of weighing devices. Sample and «Standard» must be mixed for providing a homogenous mixture, but homogeneity is hard to achieve and to verify. Also, there is high demand on «Standard» amounts when this method is used for routine analyses. For example, if 20% of «Standard» is added, 1 % error in Rietveld calculation represents 1.25% error in the sample and, if 50% of «Standard» is added, same error in calculation represents 2% error in the sample. This means that the amount of «Standard» to be added should be as less as possible. However, the less the amount, the harder to achieve regular or random particle distribution in the mixture. The physical mixture is then associated with contradictory requirements. Lastly, this method is also time consuming.

The current invention overcomes those problems by avoiding the physical mixture of the «Standard» with the solid and is an expansion and adaptation of the Rietveld method. It uses "virtual" mixtures obtained by mathematical calculations instead of physical mixtures. The use of "virtual" mixtures eliminate some error sources resulting from sample preparation and, as such, it can save time and material consumption.

The invention relates to a process for the qualitative and quantitative characterization of a material containing at least one amorphous portion by analysis of X-ray diffraction pattern in which a combined diffraction pattern of the material and of a crystalline «Standard» is analyzed with the Rietveld method in a computerized device.

According to the invention, the combined diffraction pattern is obtained by linear mathematical combination of a measured diffraction pattern of the crystalline «Standard» with a measured diffraction pattern of the material. With the invention, the diffraction pattern of the «Standard» and the diffraction pattern of the material are obtained separately using X-ray diffraction device and those patterns are combined. The resulting combined diffraction pattern, being then analyzed with the Rietveld method. The addition by linear mathematical combination of diffraction patterns is therefore a "virtual combination".

The invention, in various embodiments, may use following means, which may be combined according to any technical possibility:

- the linear mathematical combination is computed using:

$$\Sigma I\ (\Theta)_{global} = \alpha\ \Sigma I\ (\Theta)_{Standard} + \beta\ \Sigma I\ (\Theta)_{sample}$$

with $\alpha + \beta = 1$ and where :

$\Sigma I\ (\Theta)_{global}$ is the global intensity function of the mixture,
$\alpha$ is the weighting factor for measured pattern of «Standard»,
$\Sigma I\ (\Theta)_{\text{»Standard»}}$ is the intensity function of measured «Standard»,
$\Sigma I\ (\Theta)_{sample}$ is the intensity function of measured sample,
$\beta$ = weighting factor for measured pattern of the sample,

- the diffraction pattern of the «Standard» is measured for each characterization of a material,
- the diffraction pattern of the «Standard» is obtained once for all, said diffraction pattern being stored in the computerized device or on a media readable by the computerized device, (the meaning of media covers either, a directly readable source such as a floppy disk, a CD-ROM ... , or a remotely readable source such as with a modem connection...)
- the «Standard» is chosen from rutile, quartz, corundum or other equivalent materials which is at least a crystal phase normally not found in the material to be characterized,
- preferably, the amount of the «Standard» diffraction pattern, i.e. $\alpha$, added by linear mathematical combination to the material diffraction pattern is a function of the expected amount of amorphous portion of the material to be quantified, (there are cases where the amount of amorphous portion of the material is normally known because of the general properties of this kind of material and thus the amount is expected or usual)
- the amount of the «Standard» for quantification is less than 50% by weight of «Standard», i.e. $\alpha$ is less than 0.5,
- the amount of the «Standard» for quantification is around 20% to 30% by weight of «Standard», i.e. $\alpha$ is approximately between 0.2 and 0.3,
- the amount of the «Standard» for quantification for slags is around 20% by weight of rutile, i.e. $\alpha$ is approximately equal to 0.2,
- the amount of the «Standard» for quantification for fly ashes is around 30% by weight of rutile, i.e. $\alpha$ is approximately equal to 0.3,
- quantitative analysis using the Rietveld refinement of the resulting "virtual" mixture by combination of diffraction patterns is an iterative process,
- a convergence criteria is used to stop the iteration, the iteration being stopped when the convergence criteria is met,
- the number of iterations is limited to a predetermined maximum of iterations,
- a convergence criteria is used to stop the iteration, the iterations being stopped before reaching the maximum of iteration when the convergence criteria is meet,
- the calculation of the convergence is done with the following formula :

$$S_y = \Sigma w(i)\ (y(i)_{obs} - y(i)_{calc})^2$$

Where :

$S_y$= sum of weighted variance
$w(i) = 1/y(i)$ obs
$y(i)_{obs}$ = observed intensity function of the i-th point
$y(i)_{calc}$ = calculated intensity function of the i-th point.

The overall process of characterization is completed by the following two steps :

- a separate "calibration step" and/or "correction step" is made,
- the "calibration" step is made when at least a reference mixture of known composition being characterized by the combination of the «Standard» and the reference diffraction patterns and its analysis, gives a quantitative result which differs to the known composition, therefore parameters of the combination and analysis operations being then corrected in order to have a new quantitative result which corresponds to the known composition;
- the "correction" step is made in case the diffraction pattern of the «Standard» is obtained once for all when the difference between the quantitative result and a known composition is greater than a predetermined limit, therefore the diffraction pattern of the «Standard» being then obtained once again.

The invention also relates to an apparatus for the qualitative and quantitative characterization of a material containing at least one amorphous portions by analysis using X-ray diffraction method according to any one of the preceding listed characteristics.

Thanks to the invention, the problems associated with known methods can be excluded by avoiding physical mixtures and using a simple mathematical superposition of substances' diffraction patterns instead. Contrary to the general practice and knowledge, in this process, in which a virtual mixture is used, avoiding the physical mixture of the «Standard» and of the material and its source for errors, the results obtained does not depart from the traditional method. Simple mathematical superposition is a rough simplification. Physical processes caused by interaction of the different substances are ignored. Therefore the X-ray powder pattern of mathematical superposition is different from the pattern of a physical mixture. But the Rietveld method is adapted to this simplification. Such quantification method using a mathematical superposition of diffraction patterns is quasi-standardless. In preferred mode, «Standard» material has to be measured once under conditions of the samples to be quantified and the recorded/stored pattern of «Standard» can be used as much as necessary. Only if there are changes in X-ray tube power, for example due to aging effects or modification of measurement conditions, the «Standard» has to be re-measured. The invention may also be used in automation loops in plants thanks to the suppression of the physical mixture which avoids human intervention and reduces the sample preparation time.

The current invention is to be exemplified by the following explanations and description of the application of the method in relation to:

Figure 1 corresponding to the common Rietveld method with physical mixture of «Standard» and sample,
Figure 2 corresponding to the method of the invention with virtual mixture of «Standard» and sample,
Figure 3 corresponding to a quantification test with virtual mixtures,
Figure 4 corresponding to a quantification test comparing physical and virtual mixtures,
Figure 5 corresponding to a difference plot of a Rietveld calculation using virtual mixture under "Topas"® software.

Steps have to be taken for application of the method in a measuring device having X-ray diffracting patterns production and computation capabilities. This measuring device is called apparatus for simplification and includes computer means.
Those steps are:

- Adaptation for specific materials,
- Calibration of the apparatus,

  - Sample measurements,
  - Calculations,
  - Possible re-calibration of the apparatus and corrections.

The adaptation for specific materials is achieved thanks to an identification of the phases of the type of material to be quantified. For example, composed cements, slags, fly ashes, pharmaceutical products, semi-conductors or any other material having up to 99.9% of amorphous phases may be characterized with the process of the invention. A «Standard» material must be chosen which is not found in the sample to quantify. Suited measurement conditions have to be chosen, which means that sufficient counting statistics for Rietveld refinement can be obtained. Reference mixtures of known quantitative composition are made. The "Control file" of the Rietveld software is adapted to the specific materials and measurement conditions.

The calibration of the measurement device is done thanks to «Standard» and reference mixtures, which are measured on the specific apparatus. The pattern file of the «Standard» is preferably stored permanently. Each pattern file of the reference mixture is merged with the «Standard» pattern file. The calculation procedure is then calibrated to fit the reference mixture composition.

As far as sample measurements are concerned, any number of samples desired can be measured. It is then possible to use statistical and/or averaging methods in order to increase the precision of the characterization.

For the calculations, each file of sample pattern is merged with the «Standard» pattern file. In other embodiments, the sample pattern is directly merged with the «Standard». The resulting merged files are then quantified by the Rietveld method.

The invention also authorizes the re-calibration of the apparatus. As an example, the apparatus may show aging effects. For compensation, the «Standard» has to be measured frequently, and the stored «Standard» pattern file has to be renewed.

From the known method, the changes to the Rietveld method are:

- The Rietveld method has to be adapted to the mathematical superposition of a «Standard» pattern with the sample pattern. This can be done either within the software that computes, the Rietveld software, by changing the algorithm or in the file that controls the computation, the Rietveld "Control file", or after computation by recalculation of the results.
- The sample pattern has to be superposed with the «Standard» pattern. This can be done before Rietveld software computation with any suited tool or during computation by the Rietveld software itself.
- Rietveld computation has to be re-calculated in order to achieve the sample composition including the amorphous portion.

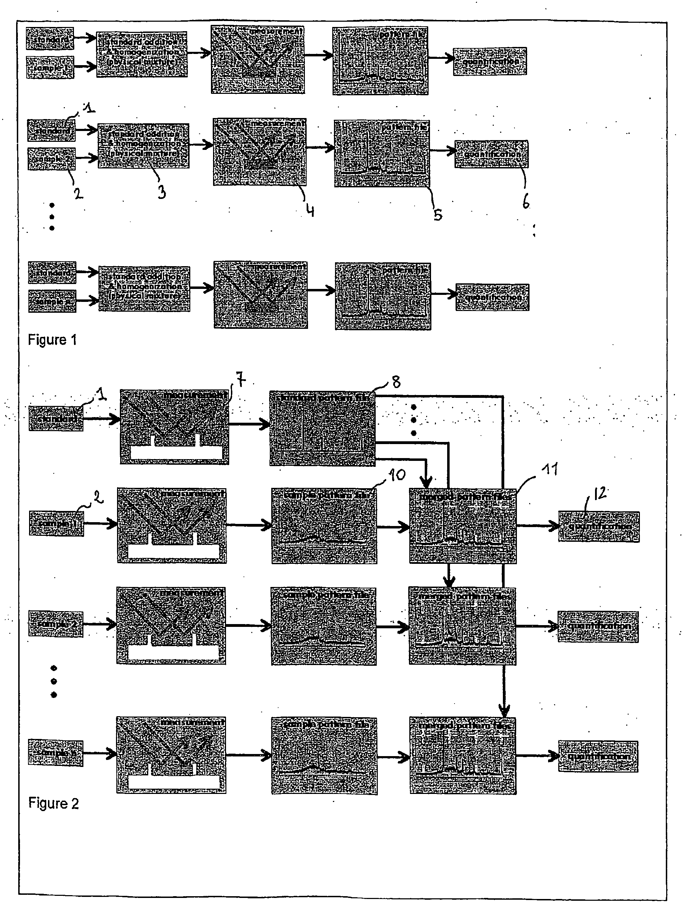

Figure 1, the common Rietveld method with physical mixture of «Standard» and sample is schematised. The physical mixture 3 of the «Standard» 1 and of the sample 2 is done before measurement 4 by X-ray. The result of the measurement is a pattern file 5 which is used for quantification 6.

Contrary to the process of Figure1, on Figure 2, on one side the «Standard» 1 is measured 7 for a «Standard» pattern file 8, on the other side the sample 2 is measured 9 for a sample pattern file 10 and then the «Standard» pattern file 8 and the sample pattern file 10 are merged by a linear combination into a merged pattern file 11. The merged pattern file 11 is then used for quantification. The «Standard» may be measured for each quantification or, in a preferred embodiment, it is measured once for all, the «Standard» pattern file being stored for further quantification.

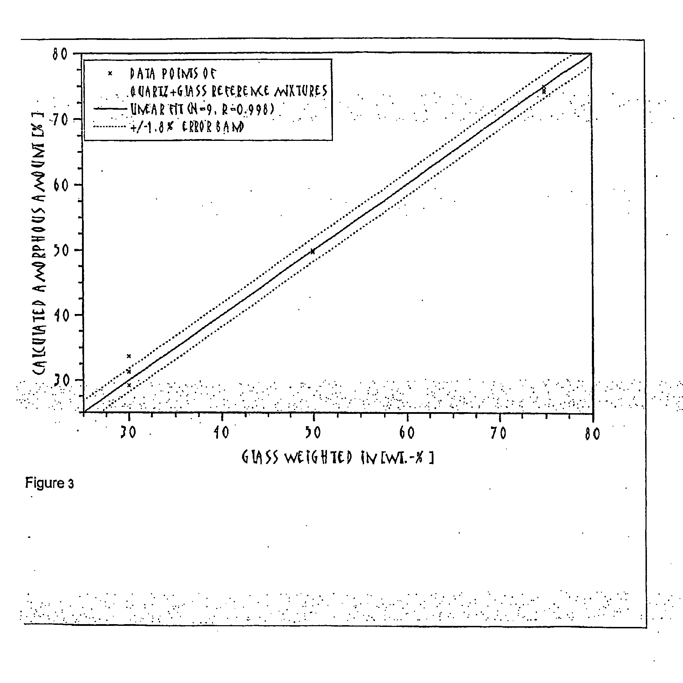

Figure 3, materials of known composition, quartz + glass mixtures, are characterized with the process of the invention using virtual mixture and the results are displayed on a graph with reference to the related known compositions. The results and known compositions expressed as numerical values correspond to the following table:

| measurements | glass weighted in | glass calculated |
|---|---|---|
| 1A | 30% | 31.3% |
| 2A | 30% | 33.7% |
| 3A | 30% | 29.2% |
| 1B | 50% | 50.0% |
| 2B | 50% | 49.7% |
| 3B | 50% | 49.9% |
| 1C | 75% | 74.1% |
| 2C | 75% | 74.4% |
| 3C | 75% | 74.9% |

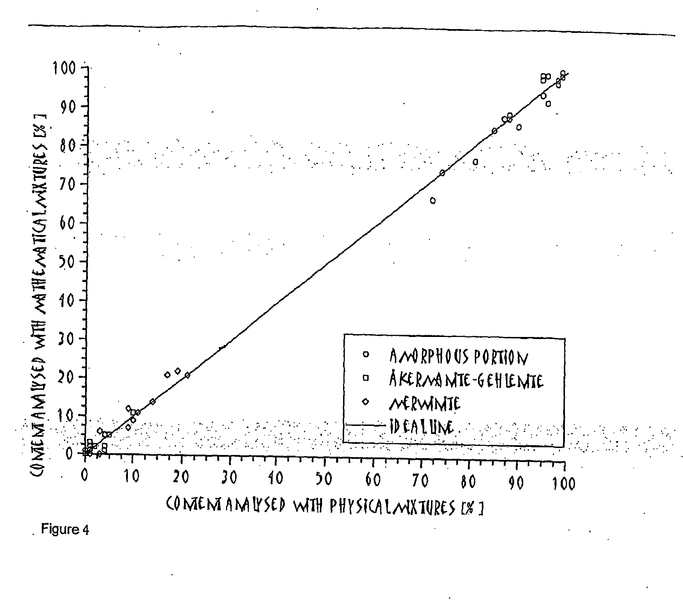

Figure 4, same materials are analyzed with the physical mixture method and with the virtual mixture method of the invention and the results are displayed on a graph. The corresponding results of both methods expressed as numerical values are in the following table:

| SAMPLE | amorphous portion % | | åkermanite-gehlenite % | | merwinite % | |
|---|---|---|---|---|---|---|
| | Virtual standard addition | Physical standard addition | Virtual standard addition | Physical standard addition | Virtual standard addition | Physical standard addition |
| 1 | 98 | 98 | 2 | 2 | 1 | 0 |
| 2 | 100 | 99 | 0 | 1 | 0 | 0 |
| 3 | 88 | 88 | 1 | 1 | 11 | 11 |
| 4 | 94 | 95 | 1 | 1 | 5 | 4 |
| 5 | 97 | 98 | 3 | 1 | 0 | 0 |
| 6 | 99 | 99 | 0 | 0 | 0 | 1 |
| 7 | 86 | 90 | 2 | 1 | 12 | 9 |
| 8 | 92 | 96 | 2 | 1 | 6 | 3 |
| 9 | 98 | 98 | 1 | 1 | 1 | 1 |
| 10 | 99 | 96 | 1 | 1 | 0 | 3 |
| 11 | 98 | 95 | 2 | 4 | 1 | 1 |
| 12 | 77 | 81 | 0 | 0 | 22 | 19 |
| 13 | 67 | 72 | 11 | 10 | 21 | 17 |
| 14 | 99 | 95 | 1 | 4 | 0 | 1 |
| 15 | 97 | 98 | 2 | 2 | 0 | 0 |
| 16 | 85 | 85 | 1 | 1 | 14 | 14 |
| 17 | 89 | 88 | 2 | 2 | 9 | 10 |
| 18 | 88 | 87 | 5 | 4 | 7 | 9 |
| 19 | 74 | 74 | 5 | 5 | 21 | 21 |

The conditions of realization of the two previous examples are given hereafter. Prepare a ground slag sample for the x-ray diffraction process. Do an X-ray measurement on the sample and the «Standard» separately for example with the following conditions using a "Siemens/Bruker® AXS" d5000 diffractometer and step-size 0.02°/ 2sec counting time, measured angle from: 10° - 60° with fixed divergence slits, power of the diffractometer: 45mA/45kV. Merge both diffractograms (diffraction patterns) together by choosing the wanted ratio between «Standard» and sample, in the following way :

for example if you wish to work with 20% «Standard» (80% sample) you have to multiply your diffractogram of your «Standard» with the factor $\alpha$ = 0.2 and the diffractogram of your sample with $\beta$ = 0.8 in the equation:

$$\Sigma I\ (\Theta)_{global}\ =\ \alpha\ \Sigma I\ (\Theta)_{Standard}\ +\ \beta\ \Sigma I\ (\Theta)_{sample}$$

for the calculation of the ratio «Standard» to sample. The parameters are:

$\Sigma I\ (\Theta)_{global}$ = global intensity function of the mixture,
$I\ (\Theta)_{Standard}$ = intensity function of measured «Standard»,
$\Sigma I\ (\Theta)_{sample}$ = intensity function of measured sample,
$\alpha$ = weighting factor for measured pattern of «Standard»,

6

β = weighting factor for measured pattern of the sample,

with $\alpha + \beta = 1$.

Such operation could be done easily with the software "Diffrac plus"® from "Bruker® AXS" or any other modern diffraction evaluation software. Use a "Control file" which contains all the crystallographic structures of the «Standard» and all crystalline phases present in the samples. The "Control file" is developed respecting basic crystallographic rules and using Rietveld notations.

For example the Rietveld software "Topas"® from " Bruker AXS"®, or "Xpert plus"® from " Philips"® are suited for this use.

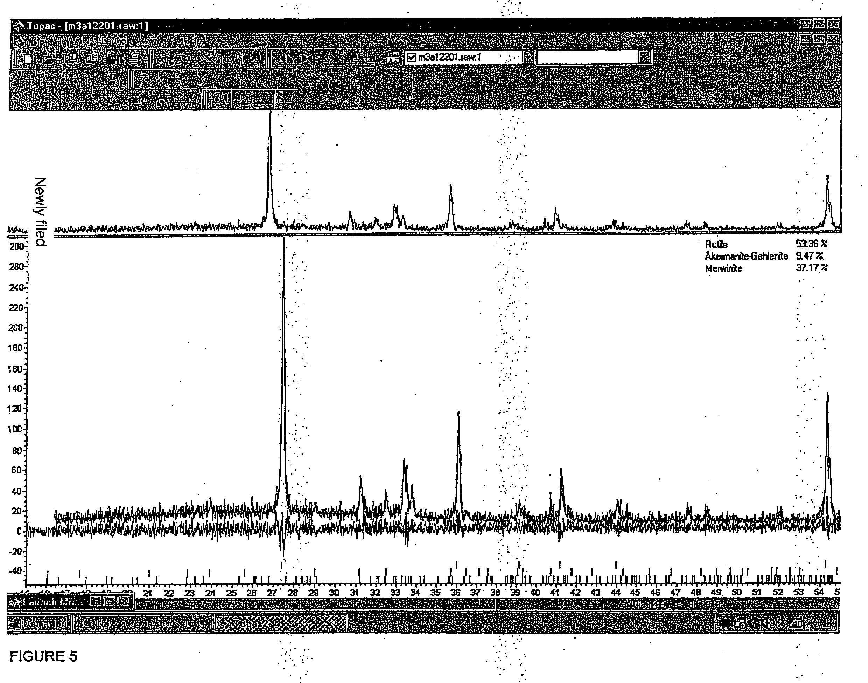

On Figure 5 which is an edition of a screen plot given by "AXS"® and "Topas"® software, on which registered names are the propriety of their respective owners, a calculation result done with "Topas"® software shows as displayed on the screen of the apparatus, a difference plot of a Rietveld calculation using Rutile as a "virtual" added «Standard», with 20% Rutile added "virtually" to 80% slag sample. The differential plot shows almost a zero difference meaning therefore the accuracy of this "virtual" method for materials having amorphous portions. In that example, the absorption effects caused by the different phases, either X-rayed in a mixture or as single phases are neglected.

**Claims**

1.  Process for the qualitative and quantitative characterization of a material (2) containing at least one amorphous portion by analysis of X-ray diffraction pattern in which a combined diffraction pattern of the material and of a crystalline "Standard" is analyzed with the Rietveld method in a computerized device, **characterized in that** the combined diffraction pattern (11) is obtained by linear mathematical combination of a measured diffraction pattern (8) of the crystalline «Standard» (1) with a measured diffraction pattern (10) of the material (2).

2.  Process according to claim 1, **characterized in that** the linear mathematical combination is computed using:

$$\Sigma I\ (\Theta)_{global}\ =\ \alpha\ \Sigma I\ (\Theta)_{Standard}\ +\ \beta\ \Sigma I\ (\Theta)_{sample}$$

with $\alpha + \beta = 1$ and where :

$\Sigma I\ (\Theta)_{global}$ is the global intensity function of the mixture,
$\alpha$ is the weighting factor for measured pattern of «Standard»,
$\Sigma I\ (\Theta)_{»Standard»}$ is the intensity function of measured «Standard»,
$\Sigma I\ (\Theta)_{sample}$ is the intensity function of measured sample,
$\beta$ = weighting factor for measured pattern of the sample.

3.  Process according to claim 1, **characterized in that** the diffraction pattern (8) of the «Standard» (1) is obtained once for all, said diffraction pattern being stored in the computerized device or on a media readable by the computerized device.

4.  Process according to anyone of the preceding claims, **characterized in that** the «Standard» (1) is chosen from rutile, quartz, corundum or other equivalent materials which is at least a crystal phase normally not found in the material to be characterized.

5.  Process according to anyone of the preceding claims, **characterized in that** preferably, the amount of the «Standard» diffraction pattern, i.e. $\alpha$, added by linear mathematical combination to the material diffraction pattern is a function of an expected amount of amorphous portion of the material to be quantified.

6.  Process according to claim 5, **characterized in that** the amount of the «Standard» for quantification is approximately between 20% and 30% by weight of «Standard», i.e. $\alpha$ is approximately between 0.2 and 0.3.

7.  Process according to claim 6, **characterized in that** the amount of the «Standard» for quantification for slags is around 20% by weight of rutile, i.e. $\alpha$ is approximately equal to 0.2.

8.  Process according to claim 6, **characterized in that** the amount of the «Standard» for quantification for fly ashes is around 30% by weight of rutile, i.e. $\alpha$, is approximately equal to 0.3.

9. Process according to anyone of the preceding claims, **characterized in that** a separate "calibration step" and/or "correction step" is made.

**Patentansprüche**

1. Verfahren zur qualitativen und quantitativen Charakterisierung eines Materials (2), das wenigstens einen amorphen Teil enthält, durch Analyse des Röntgenbeugungsmusters, wobei ein kombiniertes Beugungsmuster des Materials und eines kristallinen "Standards" mittels der Rietveld-Methode in einer computergestützten Vorrichtung analysiert wird, **dadurch gekennzeichnet, dass**
das kombinierte Beugungsmuster (11) durch eine lineare mathematische Kombination aus einem gemessenen Beugungsmuster (8) des kristallinen "Standards" (1) und einem gemessenen Beugungsmuster (10) des Materials (2) erhalten wird.

2. Verfahren nach Anspruch 1, **dadurch gekennzeichnet, dass** die lineare mathematische Kombination unter Verwendung von:

$$\Sigma I\,(\Theta)_{global} = \alpha\ \Sigma I\,(\Theta)_{Standard} + \beta\ \Sigma I\,(\Theta)_{Probe}$$

berechnet wird, wobei $\alpha + \beta = 1$ und wobei:

$\Sigma I\,(\Theta)_{global}$ die globale Intensitätsfunktion der Mischung ist,
$\alpha$ der Gewichtungsfaktor für das gemessene Muster von "Standard" ist,
$\Sigma I\,(\Theta)_{"Standard"}$ die Intensitätsfunktion des gemessenen "Standards" ist,
$\Sigma I\,(\Theta)_{Probe}$ die Intensitätsfunktion der gemessenen Probe ist,
$\beta$ = Gewichtungsfaktor für das gemessene Muster der Probe.

3. Verfahren nach Anspruch 1, **dadurch gekennzeichnet, dass** das Beugungsmuster (8) des "Standards" (1) ein für allemal in der computergestützten Vorrichtung oder auf einem von der computergestützten Vorrichtung lesbaren Medium gespeichert ist.

4. Verfahren nach einem der vorhergehenden Ansprüche, **dadurch gekennzeichnet, dass** der "Standard" (1) aus Rutil, Quarz, Korund oder anderen äquivalenten Materialien ausgewählt ist, wobei es sich um wenigstens eine Kristallphase handelt, die normalerweise nicht im zu charakterisierenden Material gefunden wird.

5. Verfahren nach einem der vorhergehenden Ansprüche, **dadurch gekennzeichnet, dass** vorzugsweise die Menge des "Standard-"Beugungsmusters, d.h. $\alpha$, um das das Beugungsmuster des Materials mathematisch ergänzt wird, eine Funktion der erwarteten Menge des amorphen Teils des zu quantifizierenden Materials ist.

6. Verfahren nach Anspruch 5, **dadurch gekennzeichnet, dass** die Menge des "Standards" zur Quantifizierung etwa zwischen 20 Gew.-% und 30 Gew.-% des "Standards", d.h. etwa zwischen 0,2 und 0,3 beträgt.

7. Verfahren nach Anspruch 6, **dadurch gekennzeichnet, dass** die Menge des "Standards" zur Quantifizierung für Schlacken etwa 20 Gew.-% Rutil beträgt, d.h. etwa gleich 0,2 ist.

8. Verfahren nach Anspruch 6, **dadurch gekennzeichnet, dass** die Menge des "Standards" für Flugaschen etwa 30 Gew.-% Rutil beträgt, d.h. $\alpha$ etwa 0,3 ist.

9. Verfahren nach einem der vorhergehenden Ansprüche, **dadurch gekennzeichnet, dass** ein getrennter "Kalibrierungsschritt" und/oder "Korrekturschritt" erfolgt.

**Revendications**

1. Procédé de caractérisation qualitative et quantitative d'un matériau (2) contenant au moins une partie amorphe par analyse du diagramme de diffraction de rayons X, dans lequel un diagramme de diffraction combiné du matériau et d'un « étalon » cristallin est analysé par la méthode de Rietveld dans un dispositif informatique, **caractérisé en ce que**
le diagramme de diffraction combiné (11) est obtenu par combinaison mathématique linéaire d'un diagramme de diffraction mesuré (8) de l'« étalon » cristallin (1) avec un diagramme de diffraction mesuré (10) du matériau (2).

2. Procédé selon la revendication 1, **caractérisé en ce que** la combinaison mathématique linéaire est calculée de la façon suivante :

$$\sum I\,(\Theta)_{globale} = \alpha \sum I\,(\Theta)_{étalon} + \beta \sum I\,(\Theta)_{échantillon}$$

avec $\alpha + \beta = 1$ et où :

$\Sigma I\,(\Theta)_{globale}$ est la fonction d'intensité globale du mélange,
$\alpha$ est le facteur de pondération du diagramme mesuré de l'« étalon »,
$\Sigma I\,(\Theta)_{étalon}$ est la fonction d'intensité de l'« étalon » mesuré,
$\Sigma I\,(\Theta)_{échantillon}$ est la fonction d'intensité de l'échantillon mesuré,
$\beta$ est le facteur de pondération du diagramme mesuré de l'échantillon.

3. Procédé selon la revendication 1, **caractérisé en ce que** le diagramme de diffraction (8) de l' « étalon » (1) est obtenu une fois pour toutes, ledit diagramme de diffraction étant stocké dans le dispositif informatique ou sur un support pouvant être lu par le dispositif informatique.

4. Procédé selon l'une quelconque des revendications précédentes, **caractérisé en ce que** l'« étalon » (1) est choisi parmi le rutile, le quartz, le corindon ou d'autres matériaux équivalents représentant au moins une phase cristalline qu'on ne trouve normalement pas dans le matériau à caractériser.

5. Procédé selon l'une quelconque des revendications précédentes, **caractérisé en ce que**, de préférence, la quantité du diagramme de diffraction de l'« étalon », à savoir $\alpha$, ajoutée par combinaison mathématique linéaire au diagramme de diffraction du matériau est une fonction d'une quantité attendue de la partie amorphe du matériau à quantifier.

6. Procédé selon la revendication 5, **caractérisé en ce que** la quantité de l' « étalon » pour la quantification est environ comprise entre 20 % et 30 % en poids de 1'« étalon », c'est-à-dire que $\alpha$ est environ compris entre 0,2 et 0,3.

7. Procédé selon la revendication 6, **caractérisé en ce que** la quantité de l'« étalon » pour la quantification de laitier est environ de 20 % en poids de rutile, c'est-à-dire que $\alpha$ est environ égal à 0,2.

8. Procédé selon la revendication 6, **caractérisé en ce que** la quantité de l'« étalon » pour la quantification de cendres volantes est environ de 30 % en poids de rutile, c'est-à-dire que $\alpha$ est environ égal à 0,3.

9. Procédé selon l'une quelconque des revendications précédentes, **caractérisé en ce qu'**une « étape de calibrage » et / ou une « étape de correction » séparée(s) est ou sont réalisée(s).

Figure 1

Figure 2

Figure 3

Figure 4

Newly filed

Topas - [m3a12201.raw:1]

m3a12201.raw:1

| Rutile | 53.36 % |
| Åkermanite-Gehlenite | 9.47 % |
| Merwinite | 37.17 % |

FIGURE 5